(19) Europäisches Patentamt
European Patent Office
Office européen des brevets

(11) EP 3 110 867 B1

(12) **EUROPEAN PATENT SPECIFICATION**

(45) Date of publication and mention of the grant of the patent:
**06.10.2021 Bulletin 2021/40**

(21) Application number: **15707476.6**

(22) Date of filing: **16.02.2015**

(51) Int Cl.:
*C08G 18/73* (2006.01) *C08G 18/75* (2006.01)
*C08G 18/12* (2006.01) *C09D 175/04* (2006.01)
*C08K 5/18* (2006.01) *C08K 5/3445* (2006.01)
*C08G 18/38* (2006.01) *C08G 18/79* (2006.01)

(86) International application number:
**PCT/US2015/016008**

(87) International publication number:
**WO 2015/130501 (03.09.2015 Gazette 2015/35)**

(54) **COATING COMPOSITIONS COMPRISING DIISOCYANATE CHAIN EXTENDED BISASPARTATES**

BESCHICHTUNGSZUSAMMENSETZUNGEN MIT DIISOCYANAT-KETTENVERLÄNGERTEN BISASPARTATEN

COMPOSITIONS DE REVÊTEMENT DES BISASPARTATES À CHAÎNE ÉTENDUE DE DIISOCYANATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2014 EP 14156582**

(43) Date of publication of application:
**04.01.2017 Bulletin 2017/01**

(73) Proprietor: **Coatings Foreign IP Co. LLC**
**Wilmington, DE 19801 (US)**

(72) Inventors:
- **ENKISCH-KRUG, Charlotte**
  **58099 Hagen (DE)**
- **FLOSBACH, Carmen**
  **42287 Wuppertal (DE)**
- **VAES, Ann**
  **B-2580 Putte (BE)**
- **TANGHE, Leen**
  **B-2550 Kontich (BE)**
- **HUYBRECHTS, Josef**
  **B-2300 Turnhout (BE)**

(74) Representative: **LKGlobal UK Ltd.**
**Cambridge House**
**Henry Street**
**Bath BA1 1BT (GB)**

(56) References cited:
**EP-A2- 0 710 656** **EP-A2- 1 081 171**
**GB-A- 2 184 733** **US-A1- 2004 147 648**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 110 867 B1

## Description

### Field of the Invention

This invention relates to a coating composition, a method for coating of a metallic substrate as well as the use of the coating in a two-component coating composition.

### Description of Prior Art

Coating compositions are well-known in the art and are used in a great variety of applications such as for primers, base coats and clear coats in vehicle original coatings and vehicle repair coatings. In this regard, great efforts have been made to develop coating compositions imparting the desired properties to the substrate or article to be coated. For example, coatings have been developed for e.g. protecting against abrasion, chemicals, corrosion, heat or mechanical impact.

In this regard, aspartate based coating compositions are well known in the art. For example, EP 0 403 921 describes coating compositions with binders based on a polyisocyanate component and an isocyanate-reactive component containing specific secondary polyamines. These secondary polyamines are also called polyaspartic acid derivatives and are based on primary polyamines and diesters of maleic or fumaric acid. EP 0 470 461 also describes coating compositions for vehicle refinish applications containing a polyisocyanate component and an isocyanate-reactive secondary diamine prepared from 3,3'-dimethyl 4,4'-diamino dicyclohexylmethane and maleic diethylester. The isocyanate-reactive component further contains a hydroxyl-functional component consisting of polyhydroxypolyacrylates or mixtures of polyhydroxypolyacrylates and polyesterpolyols. WO 2005/073188 refers to aspartates which are prepared by first reacting a di- or polyamine with an unsaturated ester and then reacting the resultant product with a maleimide. US 5,633,336 A refers to low-viscosity (cyclo)-aliphatic polyamines containing urea groups and having more than two amino groups that may be prepared by reacting (cyclo)aliphatic diamines with polyisocyanates containing isocyanurate groups or biuret groups. Such polyamines are useful as components in PUR reaction finishes and coating and adhesive compositions. WO 2013/098186 A1 refers to an aqueous urethane resin composition consisting mainly of the following (A) component and containing the following (B) and (C) components: (A) hydrophilic polyol, (B) water dispersible polyisocyanate, (C) aspartic acid ester having a secondary amino group. WO 2009/086026 discloses a transparent organic solvent-based clear coat coating composition comprising at least one binder with functional groups containing active hydrogen, in particular hydroxyl groups, at least one polyisocyanate cross-linking agent with free isocyanate groups and at least one epoxy-functional silane. US 4,677,154 discloses a process for improving the color stability of polyurethanes, wherein the polyurethane reaction is conducted in the presence of an additive stabilizer comprising 2,6-di-(t-butyl)-p-cresol (BHT) and a compound selected from specific phosphites, diphosphonites, isocyanurates and other compounds such as di-stearyl thiodipropionate, di-stearyl pentaerythritol and 4,4'-methylene bis(2,6-di-t-butylphenol. The use of the additive package prevents discoloration of the thermoplastic polyurethane caused by discoloration of the polyisocyanate. WO 2004/063242 discloses coating compositions containing aspartic compounds and polyisocyanate curing agents. The coating compositions contain a di-subtituted phenol antioxidant or a hydroperoxide decomposer. Presence of the antioxidant or decomposer leads to coatings with good resistance to UV light. EP-A2-1081171 discloses coating composition comprising aspartate-terminated urea/urethane prepolymers and polyisocyanates.

A general disadvantage of the above aspartate based coating compositions if they are combined with UV absorber is that the component containing the curable aspartate remarkably discolours during storage. Accordingly, also the coating composition comprising the curable aspartate tends to discolour during storage such that e.g. the final colour of the obtained coating does not match the desired or targeted colour anymore. However, it has not hitherto been possible to provide a satisfactory solution to avoid this color instability of aspartate based coating compositions on storage. This colour instability of the coating composition is clearly not desired.

Thus, the object of the present invention is to provide a coating composition which does not show discoloration and yellowing on storage at room temperature as well as at elevated temperatures, e.g., of up to 50 °C. The coating composition shall be color stable for a time period of at least 12 months, while at the same time the mechanical and optical properties, such as adhesion and interlayer adhesion in a multi-layer structure, abrasion, chemical and corrosion resistance, of the obtained coating are maintained on a high level.

### Summary of the Invention

This invention relates to a coating composition comprising:

a) a chain-extended aspartate prepolymer, wherein the chain-extended aspartate prepolymer

x) is free of isocyanate groups,
xi) has an NH equivalent weight of from 250 to 1,000 g, and
xii) is a reaction product of

i) a mixture comprising at least one di-aspartic acid ester and at least one amino-functional mono-aspartic acid ester, wherein the molar ratio between the at least one di-aspartic acid ester and the at least one amino-functional mono-aspartic acid ester is from 99.5:0.5 to 50:50, and
ii) at least one polyisocyanate,

b) at least one curing agent having free isocyanate groups, and
c) at least one UV absorber consisting of oxanilide or a derivative thereof and/or benzotriazole or a derivative thereof.

The present invention is also directed to a method for coating of a metallic substrate, the method comprising at least the steps of:

a) applying the coating composition as defined herein to at least a portion of a metallic substrate to be coated, and
b) curing the coating composition of step a).

The present invention is further directed to the use of the coating composition as defined herein for preparing a two-component coating composition.

Surprisingly, it has been found that according to the present invention, coating compositions can be formulated showing less discoloration and yellowing on storage at room temperature as well as at elevated temperatures, e.g., of up to 50 °C. The inventors of the present invention further surprisingly found out that the coating compositions have a much better color stability for a time period of at least 12 months, while at the same time the mechanical and optical properties, such as adhesion and interlayer adhesion in a multi-layer structure, abrasion, chemical and corrosion resistance, of the obtained coating are maintained on a high level. In particular, this is achieved by providing a coating composition comprising a defined chain-extended aspartate prepolymer and at least one UV absorber consisting of oxanilide or a derivative thereof and/or benzotriazole or a derivative thereof.

## DETAILED DESCRIPTION OF THE INVENTION

The invention will be explained in greater detail below.

It will be appreciated that certain features of the invention which are, for clarity, described above and below in the context of separate embodiments may also be provided in combination in a single embodiment. Conversely, various features of the invention that are, for brevity, described in the context of a single embodiment may also be provided separately or in any sub-combination. In addition, references in the singular may also include the plural (for example, "a" and "an" may refer to one, or one or more) unless the context specifically states otherwise.

Unless stated otherwise, all molecular weights (both number and weight average molecular weight) referred to herein are determined by GPC (gel permeation chromatography) using polystyrene as the standard and tetrahydrofurane as the liquid phase eluent.

The coating compositions according to the invention are liquid coating compositions comprising a liquid carrier. The liquid carrier may be water and/or one or more organic solvents. Therefore, the coating composition can be water-based or organic solvent-based.

Water-based coating compositions are coating compositions, wherein water is used as solvent or thinner when preparing and/or applying the coating composition. Usually, water-based coating compositions may contain, for example, 30 to 90% by weight of water, based on the total amount of the coating composition and optionally, up to 30% by weight, preferably, below 15% by weight of organic solvents, based on the total amount of the coating composition.

Organic solvent-based coating compositions are coating compositions, wherein organic solvents are used as solvents or thinners when preparing and/or applying the coating composition. Usually, solvent-based coating compositions contain, for example, 20 to 90% by weight of organic solvents, based on the total amount of the coating composition.

The organic solvents are solvents conventionally used in coating techniques. These may originate from the preparation of the binders or are added separately. Examples of suitable solvents are monohydric or polyhydric alcohols, e.g., propanol, butanol, hexanol; glycol ethers or esters, for example, diethylene glycol dialkyl ether, dipropylene glycol dialkyl ether, each with $C_1$- to $C_6$-alkyl, ethoxypropanol, butyl glycol; glycols, for example, ethylene glycol, propylene glycol, N-methyl pyrrolidone and ketones, e.g., methyl ethyl ketone, acetone, cyclohexanone; aromatic or aliphatic hydrocarbons, for example, toluene, xylene, or straight-chain or branched aliphatic $C_6$-$C_{12}$-hydrocarbons.

The individual components of the coating composition according to the invention are explained in greater detail below.

It is one requirement of the present coating composition that it comprises a chain-extended aspartate prepolymer. It is appreciated that the chain-extended aspartate prepolymer is a reaction product of a mixture comprising at least one di-aspartic acid ester and at least one amino-functional mono-aspartic acid ester.

For example, the at least one di-aspartic acid ester is a compound of Formula (I):

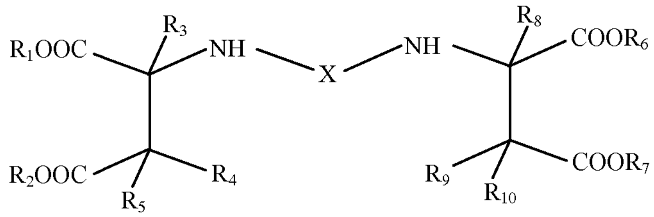

Formula (I),

wherein X represents a divalent organic group, obtained by removal of the amino groups from a primary diamine; $R_1$, $R_2$, $R_6$ and $R_7$ are the same or different organic groups which are inert towards isocyanate groups and $R_3$, $R_4$, $R_5$, $R_8$, $R_9$ and $R_{10}$ are the same or different and represent hydrogen or organic groups which are inert towards isocyanate groups.

It is preferred that X represents a divalent hydrocarbon group obtained by removal of the amino groups from the primary diamine. $R_1$, $R_2$, $R_6$ and $R_7$ are the same or different organic groups and are preferably the same organic groups. For example, $R_1$, $R_2$, $R_6$ and $R_7$ are the same or different, preferably the same, organic groups and are preferably methyl, ethyl or n-butyl, such as ethyl. $R_3$, $R_4$, $R_5$, $R_8$, $R_9$ and $R_{10}$ are preferably the same. In one embodiment, $R_3$, $R_4$, $R_5$, $R_8$, $R_9$ and $R_{10}$ are preferably the same and hydrogen.

An organic group which is inert towards isocyanate groups is an organic group which is inert towards isocyanate groups at a temperature of 150 °C or less, e.g. 110°C or less.

The at least one di-aspartic acid ester, preferably the compound of Formula (I), is preferably a reaction product of at least one dialkyl maleate and/or dialkyl fumarate and at least one primary diamine. For example, the at least one di-aspartic acid ester, preferably the compound of Formula (I), is a reaction product of at least one dialkyl maleate or dialkyl fumarate and at least one primary diamine.

The term "at least one" in the meaning of the present invention means that the respective compound comprises, preferably consists of, one or more kinds of the compound.

For example, the at least one dialkyl maleate and/or dialkyl fumarate is one kind of dialkyl maleate and/or dialkyl fumarate. Alternatively, the at least one dialkyl maleate and/or dialkyl fumarate comprises, preferably consists of, two or more kinds of dialkyl maleate and/or dialkyl fumarate. For example, the at least one dialkyl maleate and/or dialkyl fumarate comprises, preferably consists of, two or three kinds of dialkyl maleate and/or dialkyl fumarate.

Preferably, the at least one dialkyl maleate and/or dialkyl fumarate is one kind of a dialkyl maleate and/or dialkyl fumarate.

In one embodiment of the present invention, the at least one di-aspartic acid ester, preferably the compound of Formula (I), is a reaction product of at least one dialkyl maleate and at least one primary diamine. Alternatively, the at least one di-aspartic acid ester, preferably the compound of Formula (I), is a reaction product of at least one dialkyl fumarate and at least one primary diamine.

For example, the at least one amino-functional mono-aspartic acid ester is a compound of Formula (II) and/or (III):

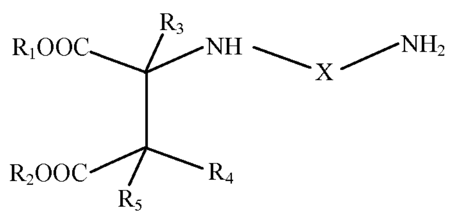

Formula (II),

wherein X represents a divalent organic group, obtained by removal of one amino group from a primary diamine; $R_1$ and $R_2$ are the same or different organic groups which are inert towards isocyanate groups and $R_3$, $R_4$ and $R_5$ are the same or different and represent hydrogen or organic groups which are inert towards isocyanate groups,

and/or

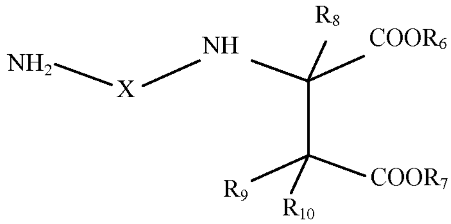

Formula (III),

wherein X represents a divalent organic group, obtained by removal of one amino group from a primary diamine; $R_6$ and $R_7$ are the same or different organic groups which are inert towards isocyanate groups and $R_8$, $R_9$ and $R_{10}$ are the same or different and represent hydrogen or organic groups which are inert towards isocyanate groups.

It is preferred that $R_1$, $R_2$, $R_6$ and $R_7$ are the same or different organic groups and are preferably the same organic groups. For example, $R_1$, $R_2$, $R_6$ and $R_7$ are the same or different, preferably the same, organic groups and are preferably methyl, ethyl or n-butyl, such as ethyl. $R_3$, $R_4$, $R_5$, $R_8$, $R_9$ and $R_{10}$ are preferably the same. In one embodiment, $R_3$, $R_4$, $R_5$, $R_8$, $R_9$ and $R_{10}$ are preferably the same and hydrogen.

The at least one amino-functional mono-aspartic acid ester, preferably the compound of Formula (II) and/or (III), is preferably a reaction product of at least one dialkyl maleate and/or dialkyl fumarate and at least one primary diamine. For example, the at least one amino-functional mono-aspartic acid ester, preferably the compound of Formula (II) and/or (III), is a reaction product of at least one dialkyl maleate or dialkyl fumarate and at least one primary diamine.

For example, the at least one dialkyl maleate and/or dialkyl fumarate is one kind of dialkyl maleate and/or dialkyl fumarate. Alternatively, the at least one dialkyl maleate and/or dialkyl fumarate comprises, preferably consists of, two or more kinds of dialkyl maleate and/or dialkyl fumarate. For example, the at least one dialkyl maleate and/or dialkyl fumarate comprises, preferably consists of, two or three kinds of dialkyl maleate and/or dialkyl fumarate.

Preferably, the at least one dialkyl maleate and/or dialkyl fumarate is one kind of a dialkyl maleate and/or dialkyl fumarate.

In one embodiment of the present invention, the at least one amino-functional mono-aspartic acid ester, preferably the compound of Formula (II) and/or (III), is a reaction product of at least one dialkyl maleate and at least one primary diamine. Alternatively, the at least one amino-functional mono-aspartic acid ester, preferably the compound of Formula (II) and/or (III), is a reaction product of at least one dialkyl fumarate and at least one primary diamine.

If the at least one di-aspartic acid ester, preferably the compound of Formula (I), and/or the at least one amino-functional mono-aspartic acid ester, preferably the compound of Formula (II) and/or (III), is/are a reaction product of at least one dialkyl maleate and at least one primary diamine, the at least one dialkyl maleate is preferably selected from the group comprising dimethyl maleate, diethyl maleate, din-butyl maleate, di-iso-butyl maleate, di-tert-butyl maleate, diamyl maleate, di-n-octyl maleate, dilauryl maleate, dicyclohexyl maleate, di-tert-butylcyclohexyl maleate and mixtures thereof. More preferably, the at least one dialkyl maleate is diethyl maleate.

Alternatively, if the at least one di-aspartic acid ester, preferably the compound of Formula (I), and/or the at least one amino-functional mono-aspartic acid ester, preferably the compound of Formula (II) and/or (III), is/are a reaction product of at least one dialkyl fumarate and at least one primary diamine, the at least one fumarate is selected from the group comprising dimethyl fumarate, diethyl fumarate, di-n-butyl fumarate, di-iso-butyl fumarate, di-tert-butyl fumarate, diamyl fumarate, din-octyl fumarate, dilauryl fumarate, dicyclohexyl fumarate, di-tert-butylcyclohexyl fumarate and mixtures thereof.

Preferably, the at least one di-aspartic acid ester, preferably the compound of Formula (I), and the at least one amino-functional mono-aspartic acid ester, preferably the compound of Formula (II) and/or (III), are a reaction product of at least one dialkyl maleate and at least one primary diamine, wherein the at least one dialkyl maleate is selected from the group comprising dimethyl maleate, diethyl maleate, din-butyl maleate, di-iso-butyl maleate, di-tert-butyl maleate and mixtures thereof. More preferably, the at least one dialkyl maleate is selected from the group comprising dimethyl maleate, diethyl maleate, di-n-butyl maleate and mixtures thereof. Most preferably, the at least one dialkyl maleate is diethyl maleate.

It is appreciated that the at least one di-aspartic acid ester, preferably the compound of Formula (I), and/or the at least one amino-functional mono-aspartic acid ester, preferably the compound of Formula (II) and/or (III), is/are obtained by reacting the at least one dialkyl maleate and/or dialkyl fumarate as described above and at least one primary diamine.

In one embodiment of the present invention, the at least one primary diamine is one kind of a primary diamine. Alternatively, the at least one primary diamine comprises, preferably consists of, two or more kinds of primary diamines. For example, the at least one primary diamine comprises, preferably consists of, two or three kinds of primary diamines.

Preferably, the at least one primary diamine is one kind of a primary diamine.

The term "diamine" in the meaning of the present invention refers to a compound having two amino functional groups. Further, the term "primary" refers to an amino functional group in which one of three hydrogen atoms in ammonia is replaced by an aliphatic, cycloaliphatic, arylalkyl or aromatic carbonyl group.

Thus, the at least one primary diamine is preferably selected from the group comprising ethylene diamine, 1,2-diaminopropane, 1,4-diaminobutane, 1,3-diaminopentane, 1,6-diaminohexane, 2,5-diamino-2,5-dimethylhexane, 2,2,4- and 2,4,4-trimethyl-1, 6-diaminohexane, 1,11-diaminoundecane, 1,12-diaminododecane, 1,3- and 1,4-cyclohexane diamine, 1-amino-3,3,5-trimethyl-5-aminomethylcyclohexane (IPDA), 2,4- and 2,6-hexahydrotoluylene diamine, 2,4'- and 4,4'-diamino-dicyclohexyl methane and 3,3'-dialkyl-4, 4'-diaminodicyclohexylmethanes, such as 3, 3'-dimethyl-4, 4'-diaminodicyclohexyl methane and 3,3'-diethyl-4,4'-diaminodicyclohexylmethane, 2-methyl-1,5-pentanediamine and 1,3- and 1,4 xylylenediamine, tetramethyl xylylenediamine, 4,4'-diaminodicyclohexyl methane (PACM) and mixtures thereof.

Preferably, the at least one primary diamine is selected from the group comprising 1-amino-3,3,5-trimethyl-5-aminomethylcyclohexane (IPDA), 2,4'- and 4,4'-diaminodicyclohexyl methane (PACM) and 3,3'-dialkyl-4, 4'-diaminodicyclohexylmethanes, such as 3, 3'-dimethyl-4, 4'-diaminodicyclohexyl methane and 3,3'-diethyl-4,4'-diaminodicyclohexylmethane, 2-methyl-1,5-pentanediamine and mixtures thereof. More preferably, the at least one primary diamine is 1-amino-3,3,5-trimethyl-5-aminomethylcyclohexane (IPDA) and/or 4,4'-diaminodicyclohexyl methane (PACM). Most preferably, the at least one primary diamine is 1-amino-3,3,5-trimethyl-5-aminomethylcyclohexane (IPDA).

It is one further requirement of the present invention that the mixture comprises the at least one di-aspartic acid ester and the at least one amino-functional mono-aspartic acid ester such that the molar ratio between the at least one di-aspartic acid ester, preferably the compound of Formula (I), and the at least one amino-functional mono-aspartic acid ester, preferably the compound of Formula (II) and/or (III), is from 99.5:0.5 to 50:50.

In one embodiment of the present invention, the mixture comprises the at least one di-aspartic acid ester and the at least one amino-functional mono-aspartic acid ester such that the molar ratio between the at least one di-aspartic acid ester, preferably the compound of Formula (I), and the at least one amino-functional mono-aspartic acid ester, preferably the compound of Formula (II) and/or (III), is from 95:5 to 60:40,

It is appreciated that the at least one di-aspartic acid ester, preferably the compound of Formula (I), and/or the at least one amino-functional mono-aspartic acid ester, preferably the compound of Formula (II) and/or (III), is/are preferably obtained by reacting the at least one dialkyl maleate and/or dialkyl fumarate and the at least one primary diamine in an equivalent ratio of dialkyl maleate and/or dialkyl fumarate to primary diamine from 2:1 to 1:4. Preferably, the at least one di-aspartic acid ester, preferably the compound of Formula (I), and/or the at least one amino-functional mono-aspartic acid ester, preferably the compound of Formula (II) and/or (III), is/are obtained by reacting the at least one dialkyl maleate and/or dialkyl fumarate and the at least one primary diamine in an equivalent ratio of dialkyl maleate and/or dialkyl fumarate to primary diamine from 1:1 to 1:3. More preferably, the at least one di-aspartic acid ester, preferably the compound of Formula (I), and/or the at least one amino-functional mono-aspartic acid ester, preferably the compound of Formula (II) and/or (III), is/are obtained by reacting the at least one dialkyl maleate and/or dialkyl fumarate and the at least one primary diamine in an equivalent ratio of dialkyl maleate and/or dialkyl fumarate to primary diamine from 1.8:1 to 2.2:1. Most preferably, the at least one di-aspartic acid ester, preferably the compound of Formula (I), and/or the at least one amino-functional mono-aspartic acid ester, preferably the compound of Formula (II) and/or (III), is/are obtained by reacting the at least one dialkyl maleate and/or dialkyl fumarate and the at least one primary diamine in an equivalent ratio of dialkyl maleate and/or dialkyl fumarate to primary diamine of about 2:1.

For example, the at least one di-aspartic acid ester, preferably the compound of Formula (I), and the at least one amino-functional mono-aspartic acid ester, preferably the compound of Formula (II) and/or (III), are preferably obtained by reacting the at least one dialkyl maleate or dialkyl fumarate and the at least one primary diamine in an equivalent ratio of dialkyl maleate or dialkyl fumarate to primary diamine from 2:1 to 1:4. Preferably, the at least one di-aspartic acid ester, preferably the compound of Formula (I), and the at least one amino-functional mono-aspartic acid ester, preferably the compound of Formula (II) and/or (III), are obtained by reacting the at least one dialkyl maleate or dialkyl fumarate and the at least one primary diamine in an equivalent ratio of dialkyl maleate or dialkyl fumarate to primary diamine from 1:1 to 1:3. More preferably, the at least one di-aspartic acid ester, preferably the compound of Formula (I), and the at least one amino-functional mono-aspartic acid ester, preferably the compound of Formula (II) and/or (III), are obtained by reacting the at least one dialkyl maleate or dialkyl fumarate and the at least one primary diamine in an equivalent ratio of dialkyl maleate or dialkyl fumarate to primary diamine from 1.8:1 to 2.2:1. Most preferably, the at least one di-aspartic acid ester, preferably the compound of Formula (I), and the at least one amino-functional mono-aspartic acid ester, preferably the compound of Formula (II) and/or (III), are obtained by reacting the at least one dialkyl maleate or dialkyl fumarate and the at least one primary diamine in an equivalent ratio of dialkyl maleate or dialkyl fumarate to primary diamine of about 2:1.

The mixture of the at least one di-aspartic acid ester, preferably the compound of Formula (I), and the at least one amino-functional mono-aspartic acid ester, preferably the compound of Formula (II) and/or (III), is preferably prepared in known manner by reacting the corresponding at least one dialkyl maleate and/or dialkyl fumarate and at least one primary diamine. For example, the preparation of the mixture comprising the at least one di-aspartic acid ester, preferably the compound of Formula (I), and the at least one amino-functional mono-aspartic acid ester, preferably the compound of Formula (II) and/or (III), from the above mentioned starting materials is carried out, for example, at a temperature of from 0 to 150 °C using the starting materials in such proportions that the mixture comprising the at least one di-aspartic acid ester, preferably the compound of Formula (I), and the at least one amino-functional mono-aspartic acid ester, preferably the compound of Formula (II) and/or (III), is obtained. Excess of starting materials can be removed by distillation after the reaction. The reaction may be carried out solvent-free or in the presence of suitable organic solvents.

Accordingly, the at least one di-aspartic acid ester, preferably the compound of Formula (I), and the at least one amino-functional mono-aspartic acid ester, preferably the compound of Formula (II) and/or (III), can be prepared simultaneously, i.e. the mixture is readily obtained by reacting the corresponding at least one dialkyl maleate and/or dialkyl fumarate and at least one primary diamine. Alternatively, the at least one di-aspartic acid ester, preferably the compound of Formula (I), and the at least one amino-functional mono-aspartic acid ester, preferably the compound of Formula (II) and/or (III), can be prepared separately, i.e. each of the at least one di-aspartic acid ester, preferably the compound of Formula (I), and the at least one amino-functional mono-aspartic acid ester, preferably the compound of Formula (II) and/or (III), is obtained by reacting the corresponding at least one dialkyl maleate and/or dialkyl fumarate and at least one primary diamine and then mixed with each other in a suitable ratio.

It is one requirement of the present invention that the chain-extended aspartate prepolymer is obtained by reacting the mixture comprising the at least one di-aspartic acid ester, preferably the compound of Formula (I), and the at least one amino-functional mono-aspartic acid ester, preferably the compound of Formula (II) and/or (III), as defined above and at least one polyisocyanate.

In one embodiment of the present invention, the at least one polyisocyanate is one kind of a polyisocyanate. Alternatively, the at least one polyisocyanate comprises, preferably consists of, two or more kinds of polyisocyanate. For example, the at least one polyisocyanate comprises, preferably consists of, two or three kinds of polyisocyanates.

Preferably, the at least one polyisocyanate is one kind of a polyisocyanate.

The at least one polyisocyanate can be any kind of organic polyisocyanates with aliphatically, cycloaliphatically, araliphatically and/or aromatically bound free isocyanate groups. The at least one polyisocyanate is preferably liquid at room temperature or become liquid through the addition of organic solvents. At 23 °C, the at least one polyisocyanate generally has a viscosity of 1 to 3,500 mPas, preferably of 5 to 3,000 mPas.

In one embodiment of the present invention, the at least one polyisocyanate has an average NCO functionality from 1.5 to 6.0. Preferably, the at least one polyisocyanate has an average NCO functionality from 1.8 to 4.0 and most preferably of about 3.0.

The at least one polyisocyanate suitable for preparing the chain-extended aspartate prepolymer is preferably selected from the group comprising 1-isocyanato-3,3,5-trimethyl-5-isocyanatomethyl-cyclohexane (IPDI), 4,4'-diisocyanatocyclohexylmethane, cyclotrimers and/or biurets of 1-isocyanato-3,3,5-trimethyl-5-isocyanatomethyl-cyclohexane, hexamethylene diisocyanate (HDI), 1-bis(isocyanatocyclohexyl)-methane and their derivatives, 1,1,6,6-tetramethyl-hexamethylene diisocyanate, p- or m-tetramethylxylylene diisocyanate, 2,2',5 trimethylhexane diisocyanate and mixtures thereof and reaction products thereof.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates. Typically, following production, the derivatives are freed from surplus parent diisocyanate, preferably by distillation, with only a residue content of less than 0.5% by weight. Triisocyanates, such as triisocyanatononan can also be used.

Preferably, the at least one polyisocyanate is 1-isocyanato-3,3,5-trimethyl-5-isocyanatomethyl-cyclohexane (IPDI) or hexamethylene diisocyanate (HDI).

It is appreciated that the chain-extended aspartate prepolymer is preferably obtained by reacting the mixture comprising the at least one di-aspartic acid ester, preferably the compound of Formula (I), and the at least one amino-functional mono-aspartic acid ester, preferably the compound of Formula (II) and/or (III), with the at least one polyisocyanate in an equivalent ratio of NH and $NH_2$ groups in the mixture to NCO groups of the at least one polyisocyanate from 2.0:0.2 to 2.0:1.8. Preferably, the chain-extended aspartate prepolymer is obtained by reacting the mixture comprising at least one di-aspartic acid ester, preferably the compound of Formula (I), and the at least one amino-functional mono-aspartic acid ester, preferably the compound of Formula (II) and/or (III), with the at least one polyisocyanate in an equivalent ratio of NH and $NH_2$ groups in the mixture to NCO groups of the at least one polyisocyanate from 2.0:0.4 to 2.0:1.4. Most preferably, the chain-extended aspartate prepolymer is obtained by reacting the mixture comprising at least one di-aspartic acid ester, preferably the compound of Formula (I), and the at least one amino-functional mono-aspartic acid ester, preferably the compound of Formula (II) and/or (III), with the at least one polyisocyanate in an equivalent ratio of NH and $NH_2$ groups in the mixture to NCO groups of the at least one polyisocyanate of about 2.0:0:6.

The chain-extended aspartate prepolymer is preferably prepared in known manner by reacting the mixture comprising at least one di-aspartic acid ester, preferably the compound of Formula (I) and at least one amino-functional mono-aspartic acid ester, preferably the compound of Formula (II) and/or (III), with the at least one polyisocyanate. For example, the preparation of the chain-extended aspartate prepolymer from the above mentioned starting materials may be carried out, for example, at a temperature of from 0 to 150 °C using the starting materials in such proportions that the chain-extended aspartate prepolymer is obtained. Excess of starting materials may be removed by distillation after the reaction. The reaction may be carried out solvent-free or in the presence of suitable organic solvents.

The chain-extended aspartate prepolymer may be further characterized by its equivalent ratio of aspartate groups to urea groups. Preferably, the chain-extended aspartate prepolymer comprises an equivalent ratio of aspartate groups to urea groups from 10:1 to 1:0.9. More preferably, the chain-extended aspartate prepolymer comprises an equivalent ratio of aspartate groups to urea groups from 5:1 to 1:0.9. Most preferably, the chain-extended aspartate prepolymer comprises an equivalent ratio of aspartate groups to urea groups of about 2.0:0.6.

It is one requirement of the present invention that the chain-extended aspartate prepolymer is free of isocyanate groups.

It is a further requirement of the present invention that the chain-extended aspartate prepolymer has an NH equivalent weight of from 250 to 1,000 g. Preferably, the chain-extended aspartate prepolymer has an NH equivalent weight of from 300 to 750 g.

A further requirement of the present invention is that the coating composition comprises at least one curing agent having free isocyanate groups.

In one embodiment of the present invention, the at least one curing agent having free isocyanate groups is one kind of a curing agent. Alternatively, the at least one curing agent having free isocyanate groups comprises, preferably consists of, two or more kinds of curing agents. For example, the at least one curing agent having free isocyanate groups comprises, preferably consists of, two or three kinds of curing agents.

Preferably, the at least one curing agent having free isocyanate groups is one kind of a curing agent.

The at least one curing agent having free isocyanate groups suitable for the coating composition is preferably at least one polyisocyanate.

The curing agent having free isocyanate groups can be any organic polyisocyanate with aliphatically, cycloaliphatically, araliphatically and/or aromatically bound free isocyanate groups. The polyisocyanates are liquid at room temperature or become liquid through the addition of organic solvents. At 23 °C, the polyisocyanates generally have a viscosity of 1 to 3,500 mPas, preferably of 5 to 3,000 mPas.

The preferred curing agent having free isocyanate groups are a polyisocyanate or polyisocyanate mixtures with exclusively aliphatically and/or cycloaliphatically bound isocyanate groups with an average NCO functionality from 1.5 to 6.0, preferably 2.0 to 6.0 and most preferably of about 3.0.

For example, the at least one curing agent having free isocyanate groups suitable for the coating composition is preferably selected from the group comprising 1-isocyanato-3,3,5-trimethyl-5-isocyanatomethyl-cyclohexane (IPDI), 4,4'-diisocyanatocyclohexylmethane, cyclotrimers and/or biurets of 1-isocyanato-3,3,5-trimethyl-5-isocyanatomethyl-cyclohexane, hexamethylene diisocyanate (HDI), 1-bis(isocyanatocyclohexyl)-methane and their derivatives, 2,2',5 trimethylhexane diisocyanate and mixtures thereof and reaction products thereof.

More preferably, the at least one curing agent having free isocyanate groups is selected from the group comprising hexamethylene diisocyanate (HDI), 1-isocyanato-3,3,5-trimethyl-5-isocyanatomethyl-cyclohexane (IPDI), 2,2',5 trimethylhexane diisocyanate and mixtures thereof. Most preferably, the at least one curing agent having free isocyanate groups is hexamethylene diisocyanate (HDI) or 1-isocyanato-3,3,5-trimethyl-5-isocyanatomethyl-cyclohexane (IPDI).

Sterically hindered curing agent having free isocyanate groups are also suitable. Examples of these are 1,1,6,6-tetramethyl-hexamethylene diisocyanate, p- or m-tetramethylxylylene diisocyanate and the appropriate hydrated homologues.

In principle, diisocyanates can be converted by the usual processes to higher functional compounds, for example, by trimerization or by reaction with water or polyols, such as, for example, trimethylolpropane or glycerine. Thus, the at least one curing agent having free isocyanate groups can also be used in the form of its reaction product such as isocyanate-modified resins or isocyanate-functional prepolymers. Generally the at least one curing agent having free isocyanate groups can be isocyanurates, uretdione diisocyanates, biuret group-containing polyisocyanates, urethane group-containing polyisocyanates, allophanate group-containing polyisocyanates, isocyanurate and allophanate group-containing polyisocyanates, polyester and polyether containing polyisocyanates, polyacrylic containing polyisocyanates, carbodiimide group-containing polyisocyanates and polyisocyanates containing acylurea groups.

The at least one curing agent having free isocyanate groups can be used individually or in combination with one another. The at least one curing agent having free isocyanate groups is preferably one commonly used in the paint industry. They are described in detail in the literature and are also commercially available.

Typically, following production, the reaction products of the at least one curing agent having free isocyanate groups are freed from surplus parent diisocyanate, preferably by distillation, with only a residue content of less than 0.5% by weight. Triisocyanates, such as triisocyanatononan can also be used.

It is appreciated that the at least one polyisocyanate used for preparing the chain-extended aspartate prepolymer and the at least one curing agent having free isocyanate groups can be the same or different. In one embodiment of the present invention, the at least one polyisocyanate used for preparing the chain-extended aspartate prepolymer and the at least one curing agent having free isocyanate groups are the same.

The isocyanate groups of the at least one curing agent having free isocyanate groups may be partially blocked. Low molecular weight compounds containing active hydrogen for blocking NCO groups are known. Examples of those blocking agents are aliphatic or cycloaliphatic alcohols, dialkylamino alcohols, oximes, lactams, imides, hydroxyalkyl esters and esters of malonic or acetoacetic acid.

A further requirement of the present invention is that the coating composition comprises at least one UV absorber. In particular, the at least one UV absorber consists of oxanilide or a derivative thereof and/or benzotriazole or a derivative thereof.

For example, the at least one UV absorber consists of oxanilide or a derivative thereof and benzotriazole or a derivative thereof. Alternatively, the at least one UV absorber consists of oxanilide or a derivative thereof or benzotriazole or a derivative thereof.

In one embodiment of the present invention, the at least one UV absorber consists of oxanilide.

The oxanilide derivative is preferably oxanilide substituted with at least one straight chain or branched chain alkyl, cycloalkyl, aralkyl, alkoxy and/or aryl group. For example, the oxanilide derivative is preferably oxanilide substituted with at least two groups independently selected from the group comprising straight chain and branched chain alkyl, cycloalkyl, arylalkyl, alkoxy and aryl group. Preferably, the oxanilide derivative is oxanilide substituted with two groups independently selected from the group comprising straight chain and branched chain alkyl, cycloalkyl, arylalkyl, alkoxy and aryl group.

The term "straight or branched chain alkyl" means a straight or branched chain alkyl group having 1 to 20 carbon atoms, and includes, for example, methyl, ethyl, propyl, isopropyl, butyl, isobutyl, secondary butyl, tertiary butyl, pentyl, isopentyl, neopentyl, hexyl, heptyl, octyl, 2-ethylhexyl, 1,1,3,3-tetramethylbutyl, nonyl, decyl, dodecyl, isododecyl, tetradecyl, hexadecyl, octadecyl, and eicosyl.

The term "cycloalkyl" means cyclic alkyl having 3 to 7 carbon atoms, and includes, for example, cyclopropyl, cyclobutyl, cyclopentyl, cyclohexyl, and cycloheptyl.

The term "arylalkyl" preferably refers to phenylalkyl which means that the alkyl moiety is a straight or branched chain alkyl having 1 to 8 carbon atoms and includes, for example, phenyl, 2-phenylethyl, 1-phenylethyl, 3-phenylpropyl, 4-phenylbutyl, 5-phenylpentyl, 6-phenylhexyl, and 8-phenyloctyl.

The term "alkoxy" means that the alkoxy moiety has a straight or branched chain alkyl having 1 to 8 carbon atoms, and includes, for example, methoxy, ethoxy, propoxy, isopropoxy, butoxy, isobutoxy, tertiary butoxy, pentyloxy, hexyloxy, heptyloxy and octyloxy.

The term "aryl" means a group containing one or more 6-membered unsaturated hydrocarbon rings, wherein the unsaturation may be represented formally by three conjugated double bonds and which may optionally be substituted at one or more carbon atoms of such rings by independently selected alkyl groups, and includes, for example, phenyl, naphthyl, methylphenyl, dimethoxyphenyl, 5-isopropyl-2-methylphenyl, methylphenyl, t-butylphenyl, nonylphenyl.

If the oxanilide derivative is oxanilide substituted with two groups, one group is preferably a straight chain or branched chain alkyl and the other group is an alkoxy group. For example, if the oxanilide derivative is oxanilide substituted with two groups, one group is selected from decyl, dodecyl, isododecyl, tetradecyl, hexadecyl, octadecyl, and eicosyl and the other group is selected from methoxy, ethoxy, propoxy, isopropoxy, and tertiary butoxy. Such alkyl group is advantageous as it provides a sufficient solubility in the polymer composition.

In one embodiment of the present invention, the at least one oxanilide derivative is N-(2-ethoxyphenyl)-N-(4-isododecylphenyl) oxamide.

Oxanilides and derivatives thereof that may be used are also commercially available. For example, N-(2-ethoxyphenyl)-N-(4-isododecylphenyl) oxamide is commercially available under the tradename Hostavin® 3206 from Clariant International LTD.

Alternatively, the at least one UV absorber consists of benzotriazole.

The benzotriazole is preferably a benzotriazole derivative such as hydroxyphenyl benzotriazole. If the benzotriazole is a hydroxyphenyl benzotriazol, the benzotriazole derivative is preferably selected from the group comprising 2-(2-hydroxy-5-methylphenyl)-2H-benzotrazole, 2-(2-hydroxy-3, 5- di-tert. amyl-phenyl)-2H-benzotriazole, 2 [2-hydroxy-3,5-di (1,1- dimethylbenzyl) phenyl]-2H-benzotriazole, 2-(2-hydroxy-3-tert. butyl-5-iso-octyl propionate)-2H-benzotriazole, reaction product of 2- (2- hydroxy-3-tert. butyl-5-methyl propionate)-2H-benzotriazole and polyethylene ether glycol having a weight average molecular weight of 300 and mixtures thereof.

In one embodiment of the present invention, the benzotriazole derivative is a reaction product of 2- (2- hydroxy-3-tert. butyl-5-methyl propionate)-2H-benzotriazole and polyethylene ether glycol having a weight average molecular weight of 300 and mixtures thereof.

Benzotriazoles and derivatives thereof that may be used are also commercially available, for example, under the tradename Tinuvin® 1130 and Tinuvin® 384-2 from BASF SE, Germany.

Preferably, the at least one UV absorber consists of oxanilide or a derivative thereof.

The coating composition comprises that at least one UV absorber preferably in a total amount of from 0.1 to 5.0 wt.-%, based on the total weight of the binder. For example, the coating composition comprises that at least one UV absorber in a total amount of from 0.1 to 3.0 wt.-%, based on the total weight of the binder.

The coating composition can be in the form of a one-component or two-component coating composition.

Preferably, the coating composition is a two-component coating composition. In other words, the components which are reactive towards one another, namely the chain-extended aspartate prepolymer and the at least one curing agent having free isocyanate groups, must be stored separately from one another prior to application in order to avoid a premature reaction. Generally, the chain-extended aspartate prepolymer and the at least one curing agent having free isocyanate groups may only be mixed together shortly before application. The term "shortly before application" is well-known to a person skilled in the art. The time period within which the ready-to-use coating composition may be prepared prior to the actual use/application depends, e.g., on the pot life of the coating composition. Compositions with very short pot life may be applied by two-component spray guns, where the reactive components are separately fed into a static mixer and applied directly afterwards.

Preferably, the chain-extended aspartate prepolymer, and the at least one curing agent having free isocyanate groups are formulated together in one composition.

If the coating composition is in the form of a two-component coating composition, the at least one UV absorber consisting of oxanilide or a derivative thereof and/or benzotriazole or a derivative thereof may be present in one of the two components or in both components of the two-component coating system. Most preferred the at least one UV absorber consisting of oxanilide or a derivative thereof and/or benzotriazole or a derivative thereof is present in the chain-extended aspartate prepolymer component.

Either transparent or pigmented colored coating compositions can be produced. Therefore, the coating compositions according to the invention are suited for use as clear coats but can be pigmented with conventional pigments and used as pigmented topcoats, basecoats or undercoats such as sealer, primer or primer surfacer. They can be used to coat a substrate with a single coat or within a multilayer coating of substrates. Use as clear coat and colored pigmented topcoat is preferred, in particular in a multilayer coating.

It is appreciated that the coating composition of the present invention preferably comprises further compounds as additives. For example, the instant coating composition further comprises at least one compound selected from the group comprising curing catalysts, antioxidants, additives, pigments, extenders, compounds with at least one alkoxy silane group and/or at least one epoxy group, hydroxyl functional binders as acrylics, polyesters, HALS derivatives, inorganic rheology control agents such as silica's and organic sag control agents based on polyurea and/or polyamide, and mixtures thereof.

In one embodiment of the invention, the coating composition further comprises at least one compound containing at least one alkoxy silane group and/or at least one epoxy group. For example, the coating composition comprises at least one compound containing at least one alkoxy silane group and at least one epoxy group. Preferably, the at least one compound containing at least one alkoxy silane group and/or at least one epoxy group is not a polyaspartic acid ester and is not a polyisocyanate. The compound containing at least one alkoxy silane group and/or at least one epoxy group is preferably a monomeric compound. Examples of said compound are compounds having at least one alkoxy silane group corresponding to Formula (IV)

$$\begin{array}{c} R_1 \\ | \\ -\,Si - R_2 \\ | \\ R_3 \end{array} \qquad (IV),$$

wherein $R_1$, $R_2$, $R_3$ are the same or different organic groups with 1 to 30 carbon atoms per molecule, provided that at least one of the residues $R_1$, $R_2$ and $R_3$ is an alkoxy group with 1 to 4 carbon atoms.

The compound containing at least one alkoxy silane group and/or at least one epoxy group preferably contains

in addition to the alkoxy silane group at least one epoxy group. Preferably the at least one compound containing at least one alkoxy silane group and at least one epoxy group is a compound of the general Formula (V),

$$\begin{array}{c} R_1 \\ | \\ X - (CH_2)_n - Si - R_2 \\ | \\ R_3 \end{array} \qquad (V),$$

wherein X represents the residues

$$\begin{array}{r} O \quad \\ / \quad \backslash \\ - O - (CH_2)_m - CH - CH_2 \end{array}$$

with m being 1-4; or represents 3,4 - epoxycyclohexyl; $R_1$, $R_2$, $R_3$ are the same or different organic residues with 1 to 30 carbon atoms, provided that at least one of the residues $R_1$, $R_2$ and $R_3$ is an alkoxy group with 1 to 4 carbon atoms; and n is 2, 3 or 4, preferably 2 or 3.

Preferred compounds of the Formula (V) are those in which X is

$$\begin{array}{r} O \quad \\ / \quad \backslash \\ - O - (CH_2)_m - CH - CH_2 \end{array}$$

with m being 1 to 4.

Compounds in which $R_1$, $R_2$ and $R_3$ are the same or different alkoxy groups having 1 to 4, preferably 1, 2 or 3 carbon atoms are likewise preferred. Particularly preferred alkoxy groups are methoxy, ethoxy and isopropoxy groups.

Examples of particularly suitable epoxy-functional silane compounds of the general Formula (V) are (3-glycidoxypropyl)trimethoxysilane, (3-glycidoxypropyl)triethoxysilane, (3-glycidoxypropyl)triisopropoxysilane, beta-(3,4-epoxycyclohexyl)ethyltrimethoxysilane and beta-(3,4-epoxycyclohexyl) ethyltriethoxysilane. Silanes with methoxy groups, such as for example (3-glycidoxypropyl)trimethoxysilane and beta-(3,4-epoxycyclohexyl)ethyltrimethoxysilane are particularly preferred here.

It is most preferred to use (3-glycidoxypropyl)trimethoxysilane.

Epoxy-functional silane compounds of Formula (V) which may be used are also obtainable as commercial products, for example under the trade name DYNASILAN® Glymo from Degussa, SILQUEST® A-187 and SILQUEST® A-186 from GE Silicones.

The compound containing at least one alkoxy silane group and/or at least one epoxy group, specifically the preferred compounds of Formula (V), can be used in amounts of 0.25 to 5.0 % by weight solids, in particular of 1.0 to 3.0 % by weight solids and most preferred of 2.0 to 3.0 % by weight solids, relative to the sum of the solids content of the chain-extended aspartate prepolymer and the at least one curing agent having free isocyanate groups being present in the coating composition. If the compound containing at least one alkoxy silane group and/or at least one epoxy group is used in quantities of greater than 5.0 % by weight solids this can lead to inferior viscosity and color stability of the multilayer coating. If the compound containing at least one alkoxy silane group and/or at least one epoxy group is used in quantities of less than 0.25 % by weight solids the described positive effects, specifically the adhesion effects, may not be achieved.

If the coating composition is in the form of a two-component coating composition, the compound containing at least one alkoxy silane group and/or at least one epoxy group may be present in one of the two components or in both components of the two-component coating system. Most preferred the compound containing at least one alkoxy silane group and/or at least one epoxy group is present in the polyisocyanate component.

Additionally or alternatively, the coating composition can further comprise an antioxidant, preferably an antioxidant component comprising A1) at least one sterically hindered phenol antioxidant and/or A2) at least one organophosphite antioxidant. Preferably, the coating composition comprises an antioxidant, preferably an antioxidant component comprising A1) at least one sterically hindered phenol antioxidant and A2) at least one organophosphite antioxidant.

Suitable sterically hindered phenol antioxidants A1) include 2,4-dimethyl-6-butylphenol, 4,4'methylene-bis(2, 6-di-tert-butylphenol), 2,6-di-tert. butyl-N,N'dimethylamino-p-cresol, butylated hydroxyanisole, 2,6-di- tertbutylphenol, 2,4, 6-tri-tertbutylphenol, 2-tert-butylphenol, 2,6- diisopropylphenol, 2-methyl-6-tert-butylphenol, 2,4-dimethyl-6-tertbutylphenol, 4-(N,N-dimethylaminomethyl)-2, 8-di-tertbutylphenol, 4-ethyl-2,6-di-tertbutylphenol. Sterically hindered phenols are also commercially available as antioxidants, for example, under the tradename Irganox®1010 and Irganox®1135 from BASF.

According to one embodiment the sterically hindered phenol antioxidant comprises 3,5-di-tert.-butyl-4-hydroxy toluene, also known as butylated hydroxy toluene or in short "BHT".

Suitable organophosphite antioxidants A2) include those organophosphites known for use as antioxidants. In one embodiment, the organophosphite comprises one or more compounds according to the formula $(RO)_3P$, wherein each R is independently alkyl or aryl.

In this context, the term "alkyl" is a saturated aliphatic group, including straight chain alkyl groups, branched chain alkyl groups, and cycloalkyl groups, wherein such straight and branched chain alkyl groups may each be optionally substituted with cycloalkyl, such cycloalkyl groups may optionally be substituted with straight or branched chain alkyl groups, and such straight chain alkyl, branched chain alkyl and cycloalkyl groups may each be optionally substituted with aryl, and includes, for example, methyl, ethyl, isopropyl, t-butyl, isodecyl, stearyl, icosyl, cyclohexyl and phenylmethyl.

In this context, the term "aryl" is a group containing one or more 6-membered unsaturated hydrocarbon rings, wherein the unsaturation may be represented formally by three conjugated double bonds and which may optionally be substituted at one or more carbon atoms of such rings by independently selected alkyl groups, and includes, for example, phenyl, naphthyl, methylphenyl, dimethoxyphenyl, 5-isopropyl-2-methylphenyl, methylphenyl, t-butylphenyl, nonylphenyl.

In one embodiment, each R of formula $(RO)_3P$ is independently an alkyl group with 1-30 carbon atoms, e.g. with 5-30 carbon atoms, or an aryl group with 1-30 carbon atoms. Examples of suitable organophosphite antioxidants are triisodecylphosphite, diphenylisodecylphosphite, diphenylisooctylphosphite, trilaurylphosphite tributylphosphite, trioctyl phosphite, triphenylphosphite, trinonylphenylphosphite, tributyltripentylphosphite, tris(2, 4-di-tert-butylphenyl)phosphite. In one embodiment, the organophosphite antioxidant comprises a trialkyl phosphite, which is, e.g., one wherein each alkyl group has less than 9 carbon atoms, more specifically 3 to 5 carbon atoms. Examples are tri-n-propyl phosphite, tri-isopropyl phosphite, tri-n-pentyl phosphite, tri-butyl phosphites, such as tri-n-butyl, tri-sec-butyl, tri-iso-butyl, and tri-tert-butyl phosphite. Each of the three alkyl groups in a given molecule may be the same or different. Each alkyl group may be straight-chained or branched.

If the antioxidant comprises an antioxidant component comprising A1) at least one sterically hindered phenol antioxidant and A2) at least one organophosphite antioxidant, the antioxidant component comprises the at least one sterically hindered phenol antioxidant A1) and the at least one organophosphite antioxidant A2) in a ratio by weight of 3.0:0.5 to 0.5:0.3 and preferably of 1:1.

According to one embodiment of the present invention, the antioxidant component comprises BHT as the at least one sterically hindered phenol antioxidant A1) and at least one organophosphite antioxidant A2) selected from the group consisting of trisnonylphenylphosphite, triphenylphosphite, triisodecylphosphite, diphenylisodecylphosphite, diphenylisooctylphosphite, trilaurylphosphite and tris(2,4-di-tert-butylphenyl)phosphite. According to another embodiment, the antioxidant component comprises BHT as the at least one sterically hindered phenol antioxidant A1) and the at least one organophosphite antioxidant A2) selected from the group consisting of trisnonylphenylphosphite, triphenylphosphite, triisodecylphosphite, diphenylisodecylphosphite, diphenylisooctylphosphite, trilaurylphosphite and tris(2,4-di-tert-butylphenyl)phosphite in the above ratio by weight.

Most preferred the antioxidant component comprises BHT and trisnonylphenylphosphite or comprises BHT and triphenylphosphite. The antioxidant component can also consist of BHT and trisnonylphenylphosphite or consist of BHT and triphenylphosphite.

If the coating composition further comprises the antioxidant, preferably the antioxidant component comprising A1) at least one sterically hindered phenol antioxidant and/or A2) at least one organophosphite antioxidant, the coating composition comprises 0.5 to 4.0 % by weight, preferably 2.0 % by weight of the antioxidant, relative to the total amount of the coating composition.

The coating compositions, according to the invention, can further contain pigments, fillers and/or usual coating additives. All colour and/or special effect-giving pigments of organic or inorganic type used in paints are suitable for pigments. Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminum or copper, interference pigments, such as, for example, aluminum coated with titanium dioxide, coated mica and graphite effect pigments. Examples of fillers are silicon dioxide, barium sulphate, talcum, aluminium silicate and magnesium silicate.

The further additives are additives usually used in the paint industry. Examples of such additives are light stabilizers, for example, HALS (hindered amine light stabilizer) compounds, flow control agents based on (meth)acrylic homopolymers or silicon oils, rheology-influencing agents, such as silica, preferably highly disperse silicic acid, or sag control agents, thickeners, such as cross-linked polycarboxylic acid or polyurethanes, anti-foaming agents and wetting agents. The additives are added in the usual amounts familiar to the person skilled in the art. Pigments, fillers and additives generally used for paint may be used in one and/or both components of the two-component system.

In another aspect, the present invention also relates to a method for coating of a metallic substrate comprising the following steps:

a) applying the coating composition as defined herein to at least a portion of a metallic substrate to be coated, and
b) curing the coating composition of step a).

It is preferred that the curing of the coating composition is preferably carried out by means of thermal energy.

The coating composition is applied according to step a) of the method to an optionally pre-coated metallic substrate.

Metallic substrates can be any industrial goods to be coated with two-component coating compositions such as two-component polyurethane coating compositions. Preferred metallic substrates are vehicle bodies and vehicle body parts. Metallic substrates which may be used are the various materials, e.g. used in industrial coating and vehicle construction, for example, metals, such as, iron, zinc, aluminium, magnesium, stainless steel or the alloys thereof.

The coating composition may be applied by conventional application methods. Examples of application methods are brushing, roller application, knife coating, dipping and spraying. Spray application is preferred. After an optional flash-off phase, the coating layers may then be cured or the next coating layer is applied.

Preferably, the applied coating composition is cured for example, at temperatures of from - 20 to 100 °C, preferably from - 10 to 80 °C, more preferably from 0 to 60 °C and most preferably from 10 to 40 °C. Even if not preferred lower curing temperatures may also be used, but would lead to longer curing times. The coating composition can alternatively even be cured at higher temperatures of, for example, 80 to 160 °C or above.

The method preferably comprises applying multiple layers of coating compositions to at least a portion of a metallic substrate. In this regard, it is appreciated that at least one layer, preferably one layer, of the multiple layers comprises the instant coating composition. Accordingly, the further layers of the multiple layers can also comprise the instant coating composition or a coating composition differing from the instant coating composition. Thus, the instant coating composition can be adjacent to the metallic substrate, or the optional pre-coat, or an interlayer of the multiple layer structure or the outer layer of the multiple layers. Preferably, the instant coating composition is the outer layer of the multiple layers. More preferably, the instant coating composition is clear coating.

The multiple layers are preferably applied either wet in wet or by first curing one layer before applying the next layer of the multiple layers. If the multiple layers are applied by first curing one layer before applying the next layer of the multiple layers, the one layer is preferably first cured for a sufficient time and at a sufficient temperature before the next layer of the multiple layers is applied. Regarding the curing temperature, it is referred to the temperatures set out above when defining the curing temperature of the applied coating composition.

It is appreciated that the coating composition of the present invention features a well-balanced drying performance, i.e. fast curing times at sufficient pot life. Furthermore, the mechanical and optical properties of the obtained coating, such as adhesion and interlayer adhesion in a multi-layer structure, abrasion, chemical and corrosion resistance, yellowing in the pot and yellowing of the aspartate component on storage, are maintained on a high level.

The coating composition and the method, according to the invention, are suitable for automotive and industrial coatings. In the automotive coatings sector, the coatings and the method can be used for coating vehicle bodies and vehicle body parts in both vehicle production line painting and vehicle refinishing. They can also be used for coating large vehicles and transportation vehicles, such as, trucks, busses and railroad cars, where curing temperatures of from- 20 to 100 °C, preferably from - 10 to 80 °C, more preferably from 0 to 60 °C and most preferably from 10 to 40 °C, can be used. Most preferred the coating compositions and the method can be used in vehicle and vehicle part refinishing. For refinishing, curing temperatures of, for example, - 10 to 80 °C, preferably from 0 to 60 °C and most preferably from 10 to 40 °C, are used. Furthermore, the coating composition and the method can be used for coating any industrial goods other than motor vehicles.

The use of the coating composition offers improved color stability. In particular, it is to be noted that the coating composition features a better colour stability than a coating composition that does not comprise the chain-extended aspartate prepolymer. Furthermore, the mechanical and optical properties, such as adhesion and interlayer adhesion in a multi-layer structure, abrasion, chemical and corrosion resistance, of the obtained coating are maintained on a high level.

In view of the advantages obtained, the present invention is further directed to the use of the coating composition as defined herein in a two-component coating composition

The invention will be explained in more detail on the basis of the examples below. All parts and percentages are on a weight basis unless otherwise indicated.

## Examples

### Measurement methods

The following measurement methods are used to evaluate the parameters given in the examples and claims.

Hazen color

The color has been measured in the Hazen scale (based on ASTM D1209) on the BYK LCSIII device.

Gardner-Holdt (bubble) viscosity

This method allows to quickly determine the kinematic viscosity of liquids such as resins and varnishes. Certified tubes from Byk Gardner are used for the measurement of the viscosity at room temperature.

Viscosity

The viscosity of the activated clear coat was determined according to DIN 53211 with a DIN 4 flow cup at room temperature (20±3°C).

Hardness

The coating is applied on a glass with a dry film thickness of about 50 micron. The hardness is measured according to the Fischer hardness test (indentation hardness according to ASTM D 1474). The results are expressed in Knoop.

Solids

The weight percentage of solids in the resin was determined by weighing approximately 1 g of sample in an aluminum dish with a diameter of 55mm containing a paperclip. A small amount of acetone was added and a uniform layer was produced by stirring with the paperclip. Then, the dish was placed in an oven at about 105 °C (± 1 °C) for about 1 hour and weighed again. The weight percentage of solids was calculated by using the Formula (VI):

$$\% \text{ solids} = 100\,\% \times (\text{residue weight}/\text{sample weight}) \qquad \text{(VI)}$$

The solids were determined by measuring two samples. The given result is thus the average of two samples.

Materials

The solvent n-butylacetate is commercially available from BASF SE, Germany, Celanese, USA or Oxea GmbH, Germany.
The solvent PGMEA is commercially available from BASF SE, Germany, Dow Chemical Company, USA or Lyondell Basell, Germany.
The solvent BGA is commercially available from the BASF SE, Germany or Ineos Oxide, Germany.
The UV absorber is commercially available from BASF SE, Germany as Tinuvin 384-2.
The UV stabilizer is commercially available from BASF SE, Germany as Tinuvin 292.
The silicone is commercially available from Byk Chemie GmbH, Germany as silicone Byk 315 and from OMG Borchers, Germany as Baysilone OL17
The acrylic additive is commercially available from Byk Chemie GmbH, Germany as acrylic Byk 361.
The hindered phenol and tris nonylphenyl phosphate additive is commercially available from Oxiris Chemicals, Germany as hindered phenol BHT (ionol, butylated hydroxytoluene) or Dover Chemicals, USA as tris nonylphenyl phosphite Doverphos4HP.
The benzotriazole is commercially available from BASF SE, Germany as Tinuvin®1130.
The oxanilide is commercially available from Clariant International LTD., Switzerland as Hostavin®3206.

**Examples**

**Test1**

The following examples illustrate the preparation of chain-extended aspartate prepolymers and coating compositions comprising the chain-extended aspartate prepolymer and benzotriazole as UV absorber.

Examples 1A and 1B: A bisaspartate of isophoronediamine and diethylmaleate

In a reactor equipped with a propeller type of stirrer, a thermometer, condenser and feeding system was loaded 204.91 g of isophorone diamine and 34.44 g of n-butylacetate. The mixture was heated to 30 °C. 6.89 g each of 2,6-ditertiary butyl-4-methylphenol and trisnonylphenyl phosphite were dissolved in 414.99 g of diethylmaleate and 10.33 g of n-butylacetate and were fed to the reactor content over about 4 hours followed by a rinsing step of 10.33 g of n-butylacetate. The reactor temperature was kept at 50 °C max and after the addition, the contents were kept for 26 hours (example 1A) and 46 hours (example 1B)

| Test results: | 1A (26 hours) | 1B (46 hours) |
|---|---|---|
| Solids (%) | 85 | 84.3 |
| Viscosity (Gardner Holdt) | B- | A+ |
| Color (Hazen) | 16 | 15 |
| GC area mono aspartate /bisaspartate | 26/74 | 15/85 |

The GC area was determined on an instrument from Interscience by injecting a sample at 250 °C on a 100% dimethylpolysiloxane column having a length of 30 m. A constant Helium flow of 1 ml/min starting at 2 min and 120 °C and increasing temperature of 10 °C per min till 300 °C. For the reaction products, the amino-functional mono-aspartic acid ester was detected between 14 and 16 min while the di-aspartic acid ester was detected between 19 and 21 min.

Examples 2A and 2B: Isophorone diisocyanate chain extended reaction products of examples 1A and 1B

688.78 g of the reaction products of reference example 1A or 1B, taken after 26 and 46 hours, were each diluted with 151.62 g of n-butylacetate and heated in the reactor till 40 °C. 80.82 grams of isophoronediisocyanate mixed with 16.89 g of n-butylacetate were added to each reactor over 1 hour while keeping the reactor at 50 °C max. After a rinsing step with 16.89 g of n-butylacetate, each reactor content was kept at 50 °C till the NCO has disappeared as measured by IR spectrometry. A dilution step of 45 grams of n-butylacetate was added to each reactor. The results of the end-products are found below.

| Test results: | 2A | 2B |
|---|---|---|
| Solids (%) | 65.9 | 66.4 |
| Viscosity (Gardner Holdt) | A - | A- |
| Color (Hazen) | 5 | 22 |

Examples 3A and 3B: Hexamethylene diisocyanate chain extended reaction product of example 1B

571 g of the reaction product of example 1B was diluted with 163 g of n-butylacetate and mixed in the reactor at room temperature. 67 g (A) or 50.4 g (B) of hexamethylene diisocyanate mixed with 14 g (A) or 10.8 g (B) of n-butylacetate were added to the reactor over 1 hour while keeping the reactor at 50 C max. After a rinsing step with 14 g (A) or 10.8 g (B) of n-butylacetate, the reactor contents were kept at about 40 °C till the NCO has disappeared as measured by IR spectrometry. The results of the end-products are found below.

| Test results: | 3A | 3B |
|---|---|---|
| Solids (%) | 67.4 | 67.6 |
| Viscosity (Gardner Holdt) | D + 1/2 | A |
| Color (Hazen) | 16 | 19 |

Example 4: Preparation of clear coats based on examples 1A 3A and 3B

The following coating compositions were prepared:

4A: 72.22 g of binder 1A were mixed with 25.38 g of n-butylacetate and 2.4 g of Tinuvin®1130.
4A': As example 4A, but Tinuvin®1130 was replaced by n-butylacetate.
4B: 92.85 g of binder 3A were mixed with 4.75 g of n-butylacetate and 2.4 g Tinuvin®1130.
4B': As example 4B, but Tinuvin®1130 was replaced by n-butylacetate.
4C: 92.85 g of binder 3B were mixed with 4.75 g of n-butylacetate and 2.4 g Tinuvin®1130.
4C': As example 4C, but Tinuvin®1130 was replaced by n-butylacetate.

The color stability of the coating compositions of examples 4A to 4C' was determined by measuring the Hazen on shelf at room temperature and in an oven at 49 °C. The results are outlined in table 1 below.

Table 1: (Example 4A is not according to the invention)

| | **Initial** | **1week** | | **2 weeks** | | **3 weeks** | |
|---|---|---|---|---|---|---|---|
| | | Shelf | Oven | Shelf | Oven | Shelf | Oven |
| Example 4 A' | 12 | 13 | 23 | 13 | 26 | 13 | 38 |
| Example 4 A | 80 | 80 | 98 | 82 | 113 | 82 | 127 |
| Example 4 B' | 12 | 16 | 18 | 16 | 21 | 14 | 29 |
| Example 4 B | 66 | 69 | 83 | 71 | 84 | 73 | 86 |
| Example 4 C' | 13 | 13 | 18 | 14 | 21 | 14 | 28 |
| Example 4 C' | 68 | 71 | 80 | 70 | 82 | 70 | 91 |

It is clearly seen that the coating compositions comprising the chain-extended aspartate prepolymer with Tinuvin®1130 added (examples 4B and 4C) give a better color stability than the composition based on the bisaspartate (example 4A).

Example 5: Preparation of clear coats based on examples 1B, 2A and 2B

The clear coat compositions have been prepared by activating with a polyisocyanate activator based on 60.67 % Desmodur®N3390 (Aliphatic polyisocyanate HDI trimer, 90% solids, Bayer), 36.93 % n-butylacetate and an epoxy-functional silane (2.4% Silquest®A187 from Momentive Performance Materials). The clear coat formulations and the activators have been mixed by hand in a ratio so that the NCO to NH ratio has been kept constant at 1.21.

The clear coats 5A, 5B and 5C have been formulated with the components shown in Table 2 below.

Table 2:

| | **Type of product** | **Ref 1 (wt.-%)** | **Invention 2 (wt.-%)** | **Invention 3 (wt.-%)** |
|---|---|---|---|---|
| Example 1A | | 64.93 | | |
| Example 2A | | | 74.2 | |
| Example 2B | | | | 74.2 |
| n-butylacetate | Solvent | 26.14 | 15.83 | 15.83 |
| PGMEA | Solvent | 2.1 | 2.1 | 2.1 |
| BGA | Solvent | 2 | 2 | 2 |
| UV protection | UV absorber/ stabilizer | 3.32 | 3.32 | 3.32 |
| Flow and levelling additives | Silicone and acrylic additives | 0.55 | 0.55 | 0.55 |

(continued)

| | Type of product | Ref 1 (wt.-%) | Invention 2 (wt.-%) | Invention 3 (wt.-%) |
|---|---|---|---|---|
| Hindered phenol + tris nonylphenyl phosphite | Anti-yellowing additives | 2 | 2 | 2 |

The color stability of the clear coats of Ref1, Invention 2 and 3 was determined by measuring the Hazen on shelf in an oven at 49 °C. The results are outlined in table 3 below.

Table 3:

| | Initial color (Hazen) | Color after 2weeks at 49°C (Hazen) | Color after 4weeks at 49°C (Hazen) | Color after 6weeks at 49°C (Hazen) |
|---|---|---|---|---|
| Ref1 (% by weight) | 70 | 102 | 123 | 142 |
| Invention 2 (wt.-%) | 61 | 77 | 76 | 79 |
| Invention 3 (wt.-%) | 70 | 78 | 78 | 80 |

Table 3 demonstrates that the inventive examples 2 and 3, based on the chain-extended aspartate prepolymers 2A and 2B, have improved color stability (less increase in Hazen) during storage at 49°C in comparison to the reference example 1, which is based on bisaspartate 1B.

## Test2

The following examples illustrate the preparation of chain-extended aspartate prepolymers and coating compositions comprising the chain-extended aspartate prepolymer and oxanilide as UV absorber.

Example 1: A bisaspartate of isophoronediamine and diethylmaleate

In a reactor equipped with a propeller type of stirrer, a thermometer, condenser and feeding system was loaded 204.91 g of isophorone diamine and 34.44 g of n-butylacetate. The mixture was heated to 30 °C. 6.89 g each of 2,6-di-tertiary butyl-4-methylphenol and trisnonylphenyl phosphite were dissolved in 414.99 grams of diethylmaleate and 10.33 g of n-butylacetate and were fed to the reactor content over about 4 hours followed by a rinsing step of 10.33 g of n-butylacetate. The reactor temperature was kept at 50 °C max and after the addition, the contents were kept for 46 hours

Test results:

| | |
|---|---|
| Solids (%) | 84.3 |
| Viscosity (Gardner Holdt) | A+ |
| Color (Hazen) | 15 |

Example 2: Bisaspartate of p-Aminocvclohexylmethane (PACM) and diethylmaleate

In a reactor equipped with a propeller type of stirrer, a thermometer, condenser and feeding system was loaded 341 g of PACM (Vestamine PACM from Evonik) and 50 g of n-butylacetate. The mixture was heated to 30 C. 10 g each of 2,6-di-tertiary butyl-4-methylphenol and trisnonylphenyl phosphite were dissolved in 559 g of diethylmaleate and 15 g of n-butylacetate and were fed to the reactor content over about 2 hours followed by a rinsing step of 15 g of n-butylacetate. The reactor temperature was kept at 50 °C for about 24 hours and an additional 24 hours at 60 °C.

Test results:

| | |
|---|---|
| Solids (%) | 86.4 |
| Viscosity (Gardner Holdt) | F- |

(continued)

| | |
|---|---|
| Color (Hazen) | 30 |

Example 3: Isophorone diisocyanate chain extended reaction product of example 2

615 g of the reaction product of example 2 were diluted with 176 g of n-butylacetate and heated in the reactor till 40 C. 67 g of isophoronediisocyanate mixed with 14 g of n-butylacetate were added to the reactor over 1 hour while keeping the reactor at 50 °C max. After a rinsing step with 14 g of n-butylacetate, the reactor content was kept at 50 °C till the NCO has disappeared as measured by IR spectrometry. The results of the end-products are found below.

Test results:

| | |
|---|---|
| Solids (%) | 68 |
| Viscosity (Gardner Holdt) | H |
| Color (Hazen) | 8 |

Examples 4 A and 4B: Hexamethylene diisocyanate chain extended reaction product of example 1

571 g of the reaction product of example 1 were diluted with 163 g of n-butylacetate and mixed in two reactors at room temperature. 67 g (A) or 50.4 g (B) of hexamethylene diisocyanate mixed with 14 g (A) or 10.8 g (B) of n-butylacetate were added to each reactor over 1 hour while keeping the reactors at 50 °C max. After a rinsing step with 14 g (A) or 10.8 g (B) of n-butylacetate, the reactor contents were kept at about 40 °C till the NCO has disappeared as measured by IR spectrometry. The results of the end-products are found below.

| Test results: | 3A | 3B |
|---|---|---|
| Solids (%) | 67.4 | 67.6 |
| Viscosity (Gardner Holdt) | D + 1/2 | A |
| Color (Hazen) | 16 | 19 |

Example 4: Preparation of clear coats based on examples 1, 2, 3A and 3B

The following coating compositions were prepared:

5A: 72.22 g of example 1 were mixed with 25.38 grams of n-butylacetate and 2.4 g of Tinuvin®1130.
5A': As example 5A, but Tinuvin®1130 was replaced by Hostavin®3206.
5B: 72.22 g of example 2 were mixed with 25.38 g of n-butylacetate and 2.4 g of Tinuvin®1130.
5B': As example 5B, but Tinuvin®1130 was replaced by Hostavin®3206.
5C: 92.85 g of example 3A were mixed with 4.75 g of n-butylacetate and 2.4 grams Tinuvin®1130.
5C': As example 5C, but Tinuvin®1130 was replaced by by Hostavin®3206.
5D: 92.85 g of example 3B were mixed with 4.75 grams of n-butylacetate and 2.4 g Tinuvin®1130.
5D': As example 5D, but Tinuvin®1130 was replaced by Hostavin®3206.
5E: 92.85 g of example 3B were mixed with 4.75 g of n-butylacetate and 2.4 g Tinuvin®1130.
5E': As example 5E, but Tinuvin®1130 replaced by Hostavin®3206.

The color stability of the coating compositions of examples 5A to 5E' was determined by measuring the Hazen on shelf at room temperature and in an oven at 49 °C. The results are outlined in table 4 below.

Table 4:

| | initial | 1 week | | 2 weeks | | 3 weeks | |
|---|---|---|---|---|---|---|---|
| | | Shelf | Oven | Shelf | Oven | Shelf | Oven |
| Example 5A | 80 | 80 | 98 | 82 | 113 | 82 | 127 |
| Example 5A' | 48 | 51 | 61 | 53 | 66 | 49 | 77 |
| Example 5B | 74 | 76 | 84 | 79 | 83 | 82 | 85 |

(continued)

| | initial | 1 week | | 2 weeks | | 3 weeks | |
|---|---|---|---|---|---|---|---|
| | | Shelf | Oven | Shelf | Oven | Shelf | Oven |
| Example 5B' | 46 | 50 | 50 | 52 | 58 | 48 | 67 |
| Example 5C | 67 | 69 | 72 | 71 | 78 | 70 | 87 |
| Example 5C' | 44 | 52 | 56 | 53 | 57 | 51 | 65 |
| Example 5D | 66 | 69 | 83 | 71 | 84 | 73 | 86 |
| Example 5D' | 50 | 55 | 59 | 57 | 59 | 54 | 69 |
| Example 5E | 68 | 71 | 80 | 70 | 82 | 70 | 91 |
| Example 5E' | 49 | 54 | 60 | 55 | 60 | 53 | 65 |

It is clearly seen that the coating compositions comprising the chain-extended aspartate prepolymer (examples 5C to 5E') give a better color stability than the composition based on the bisaspartate (examples 5A to 5B'). Furthermore, it can be gathered that the coating compositions comprising the chain-extended aspartate prepolymer and an oxanilide UV protector (Hostavin®3206; examples 5C', 5D' and 5E') give even a better color stability than the coating compositions comprising a benzotriazole UV protector (Tinuvin®1130; examples 5C, 5D and 5E).

## Claims

**1.** A coating composition comprising:

a) a chain-extended aspartate prepolymer, wherein the chain-extended aspartate prepolymer

x) is free of isocyanate groups,
xi) has an NH equivalent weight of from 250 to 1,000 g, and
xii) is a reaction product of

i) a mixture comprising at least one di-aspartic acid ester and at least one amino-functional mono-aspartic acid ester, wherein the molar ratio between the at least one di-aspartic acid ester and the at least one amino-functional mono-aspartic acid ester is from 99.5:0.5 to 50:50, and
ii) at least one polyisocyanate,

b) at least one curing agent having free isocyanate groups, and
c) at least one UV absorber consisting of oxanilide or a derivative thereof and/or benzotriazole or a derivative thereof.

**2.** The coating composition of claim 1, wherein the at least one di-aspartic acid ester and/or the at least one amino-functional mono-aspartic acid ester is/are a reaction product of at least one dialkyl maleate and/or dialkyl fumarate and at least one primary diamine.

**3.** The coating composition of claim 1 or 2, wherein the at least one di-aspartic acid ester and/or the at least one amino-functional mono-aspartic acid ester has/have been obtained by reacting the at least one dialkyl maleate and/or dialkyl fumarate and the at least one primary diamine in an equivalent ratio of dialkyl maleate and/or dialkyl fumarate to primary diamine from 2:1 to 1:4.

**4.** The coating composition of claim 2 or 3, wherein the at least one dialkyl maleate is selected from the group comprising dimethyl maleate, diethyl maleate, di-n-butyl maleate, di-iso-butyl maleate, di-tert-butyl maleate, diamyl maleate, di-n-octyl maleate, dilauryl maleate, dicyclohexyl maleate, di-tert-butylcyclohexyl maleate and mixtures thereof and/or the at least one dialkyl fumarate is selected from the group comprising dimethyl fumarate, diethyl fumarate, di-n-butyl fumarate, di-iso-butyl fumarate, di-tert-butyl fumarate, diamyl fumarate, di-n-octyl fumarate, dilauryl fumarate, dicyclohexyl fumarate, di-tert-butylcyclohexyl fumarate and mixtures thereof.

5. The coating composition of any one of claims 2 to 4, wherein the at least one primary diamine is selected from the group comprising ethylene diamine, 1,2-diaminopropane, 1,4-diaminobutane, 1,3-diaminopentane, 1,6-diaminohexane, 2,5-diamino-2,5-dimethylhexane, 2,2,4- and 2,4,4-trimethyl-1, 6-diaminohexane, 1,11-diaminoundecane, 1,12-diaminododecane, 1,3- and 1,4-cyclohexane diamine, 1-amino-3,3,5-trimethyl-5-aminomethylcyclohexane (IPDA), 2,4- and 2,6-hexahydrotoluylene diamine, 2,4'- and 4,4'-diamino-dicyclohexyl methane and 3,3'-dialkyl-4, 4'-diaminodicyclohexylmethanes, such as 3, 3'-dimethyl-4, 4'-diaminodicyclohexyl methane and 3,3'-diethyl-4,4'-diaminodicyclohexylmethane, 2-methyl-1,5-pentanediamine and 1,3- and 1,4 xylylenediamine, tetramethyl xylylenediamine, 4,4'-diaminodicyclohexyl methane (PACM) and mixtures thereof.

6. The coating composition of any one of claims 1 to 5, wherein the at least one polyisocyanate and/or curing agent having free isocyanate groups is selected from the group comprising 1-isocyanato-3,3,5-trimethyl-5-isocyanatomethyl-cyclohexane (IPDI), 4,4'-diisocyanatocyclohexylmethane, cyclotrimers and/or biurets of 1-isocyanato-3,3,5-trimethyl-5-isocyanatomethyl-cyclohexane, hexamethylene diisocyanate (HDI), 1- bis(isocyanatocyclohexyl)-methane and their derivatives, 1,1,6,6-tetramethyl-hexamethylene diisocyanate, p- or m-tetramethylxylylene diisocyanate, 2,2',5 trimethylhexane diisocyanate and mixtures thereof and reaction products thereof.

7. The coating composition of any one of claims 1 to 6, wherein the chain-extended aspartate prepolymer has been obtained by reacting the mixture comprising at least one di-aspartic acid ester and at least one amino-functional mono-aspartic acid ester with the at least one polyisocyanate in an equivalent ratio of NH and $NH_2$ groups in the mixture to NCO groups of the at least one polyisocyanate from 2.0:0.2 to 2.0:1.8.

8. The coating composition of any one of claims 1 to 7, wherein the chain-extended aspartate prepolymer comprises an equivalent ratio of aspartate groups to urea groups from 10:1 to 1:0.9.

9. The coating composition of any one of claims 1 to 8, wherein

a) the oxanilide or the derivative thereof is N-(2-ethoxyphenyl)-N-(4-isododecylphenyl) oxamide, and/or
b) the benzotriazole or the derivative thereof is selected from the group comprising benzotriazole, 2-(2-hydroxy-5-methylphenyl)-2H-benzotrazole, 2-(2-hydroxy-3, 5- di-tert. amyl-phenyl)-2H-benzotriazole, 2 [2-hydroxy-3,5-di (1,1- dimethylbenzyl) phenyl]-2H-benzotriazole, 2- (2-hydroxy-3-tert. butyl-5-iso-octyl propionate)-2H-benzotriazole, reaction product of 2- (2-hydroxy-3-tert. butyl-5-methyl propionate)-2H-benzotriazole and polyethylene ether glycol having a weight average molecular weight of 300 and mixtures thereof.

10. The coating composition of any one of claims 1 to 9, wherein the coating composition further comprises at least one compound selected from the group comprising curing catalysts, antioxidants, additives, pigments, extenders, compounds with at least one alkoxy silane group and/or at least one epoxy group, hydroxyl functional binders as acrylics, polyesters, HALS derivatives, inorganic rheology control agents such as silica's and organic sag control agents based on polyurea and/or polyamide, and mixtures thereof

11. The coating composition of any one of claims 1 to 10, wherein the coating composition is a two-component coating composition.

12. A method for coating of a metallic substrate, the method comprising at least the steps of:

a) applying the coating composition of any one of claims 1 to 11 to at least a portion of a metallic substrate to be coated, and
b) curing the coating composition of step a).

13. The method of claim 12, wherein multiple layers of coating compositions are applied to at least a portion of a metallic substrate and at least one of the layers comprises the coating composition of any one of claims 1 to 11 and the multiple layers are applied either wet in wet or by first curing one layer before applying the next layer of the multiple layers.

14. Use of the coating composition of any one of claims 1 to 11 for preparing a two-component coating composition.

## Patentansprüche

1. Beschichtungszusammensetzung, umfassend:

   a) ein kettenverlängertes Aspartat-Präpolymer, wobei das kettenverlängerte Aspartat-Präpolymer

      x) frei von Isocyanatgruppen ist,
      xi) ein NH-Äquivalentgewicht von 250 bis 1.000 g aufweist und
      xii) ein Reaktionsprodukt ist von

         i) einer Mischung umfassend mindestens einen Diasparaginsäureester und mindestens einen aminofunktionellen Monoasparaginsäureester, wobei das Molverhältnis zwischen dem mindestens einen Diasparaginsäureester und dem mindestens einen aminofunktionellen Mono- Asparaginsäureester 99,5:0,5 bis 50:50 beträgt und
         ii) mindestens einem Polyisocyanat,

   b) mindestens einen Härter mit freien Isocyanatgruppen und
   c) mindestens einen LIV-Absorber bestehend aus Oxanilid oder einem Derivat davon und/oder Benzotriazol oder einem Derivat davon.

2. Beschichtungszusammensetzung nach Anspruch 1, wobei der mindestens eine Diasparaginsäureester und/oder der mindestens eine aminofunktionelle Monoasparaginsäureester ein Reaktionsprodukt von mindestens einem Dialkylmaleat und/oder Dialkylfumarat und mindestens einem primären Diamin ist.

3. Beschichtungszusammensetzung nach Anspruch 1 oder 2, wobei der mindestens eine Diasparaginsäureester und/oder der mindestens eine aminofunktionelle Monoasparaginsäureester durch Umsetzen des mindestens einen Dialkylmaleats und/oder Dialkylfumarats und des mindestens einen primären Diamins in einem Äquivalentverhältnis von Dialkylmaleat und/oder Dialkylfumarat zu primärem Diamin von 2:1 bis 1:4 erhalten wird.

4. Beschichtungszusammensetzung nach Anspruch 2 oder 3, wobei das mindestens eine Dialkylmaleat ausgewählt ist aus der Gruppe umfassend Dimethylmaleat, Diethylmaleat, Di-n-butylmaleat, Diisobutylmaleat, Di-tert-butylmaleat, Diamylmaleat, Di-n-octylmaleat, Dilaurylmaleat, Dicyclohexylmaleat, Di-tert-butylcyclohexylmaleat und Mischungen davon und/oder das mindestens eine Dialkylfumarat ausgewählt ist aus der Gruppe umfassend Dimethylfumarat, Diethylfumarat, Di-n-butylfumarat, Diisobutylfumarat, Di-tert-butylfumarat, Diamylfumarat, Di-n-octylfumarat, Dilaurylfumarat, Dicyclohexylfumarat, Di-tert-butylcyclohexylfumarat und Mischungen davon.

5. Beschichtungszusammensetzung nach einem der Ansprüche 2 bis 4, wobei das mindestens eine primäre Diamin ausgewählt ist aus der Gruppe umfassend Ethylendiamin, 1,2-Diaminopropan, 1,4-Diaminobutan, 1,3-Diaminopentan, 1,6-Diaminohexan, 2,5-Diamino-2,5-dimethylhexan, 2,2,4- und 2,4,4-Trimethyl-1,6-diaminohexan, 1,11-Diaminoundecan, 1,12-Diaminododecan, 1,3- und 1,4-Cyclohexandiamin, 1-Amino-3,3,5-trimethyl-5-aminomethylcyclohexan (IPDA), 2,4- und 2,6-Hexahydrotoluylendiamin, 2,4'- und 4,4'-Diaminodicyclohexylmethan und 3,3'-Dialkyl-4,4'-diaminodicyclohexylmethane wie 3,3'-Dimethyl-4,4'-diaminodicyclohexylmethan und 3,3'-Diethyl-4,4'-diaminodicyclohexylmethan, 2-Methyl-1,5-pentandiamin und 1,3- und 1,4-Xylylendiamin, Tetramethylxylylendiamin, 4,4'-Diaminodicyclohexylmethan (PACM) und Mischungen davon.

6. Beschichtungszusammensetzung nach einem der Ansprüche 1 bis 5, wobei das mindestens eine Polyisocyanat und/oder der Härter mit freien Isocyanatgruppen ausgewählt ist aus der Gruppe umfassend 1-Isocyanato-3,3,5-trimethyl-5-isocyanatomethyl-cyclohexan (IPDI), 4,4'-Diisocyanatocyclohexylmethan, Cyclotrimere und/oder Biurete von 1-Isocyanato-3,3,5-trimethyl-5-isocyanatomethyl-cyclohexan, Hexamethylendiisocyanat (HDI), 1-Bis(isocyanatocyclohexyl)-methan und deren Derivate, 1,1,6,6-Tetramethylhexamethylendiisocyanat, p- oder m-Tetramethylxylylendiisocyanat, 2,2',5-Trimethylhexandiisocyanat und Mischungen davon und Reaktionsprodukte davon.

7. Beschichtungszusammensetzung nach einem der Ansprüche 1 bis 6, wobei das kettenverlängerte Aspartat-Präpolymer durch Umsetzen der Mischung umfassend mindestens einen Diasparaginsäureester und mindestens einen aminofunktionellen Monoasparaginsäureester mit dem mindestens einen Polyisocyanat im Äquivalentverhältnis von NH- und $NH_2$-Gruppen in der Mischung zu NCO-Gruppen des mindestens einen Polyisocyanats von 2,0:0,2 bis 2,0:1,8 erhalten wurde.

8. Beschichtungszusammensetzung nach einem der Ansprüche 1 bis 7, wobei das kettenverlängerte Aspartat-Präpolymer ein Äquivalentverhältnis von Aspartatgruppen zu Harnstoffgruppen von 10:1 bis 1:0,9 umfasst.

9. Beschichtungszusammensetzung nach einem der Ansprüche 1 bis 8, wobei

a) das Oxanilid oder das Derivat davon N-(2-Ethoxyphenyl)-N-(4-isododecylphenyl)-oxamid ist, und/oder
b) das Benzotriazol oder das Derivat davon ausgewählt ist aus der Gruppe umfassend Benzotriazol, 2-(2-Hydroxy-5-methylphenyl)-2H-benzotrazol, 2-(2-Hydroxy-3,5-di-tert-amyl-phenyl)-2H-benzotriazol, 2[2-Hydroxy-3,5-di(1,1-dimethylbenzyl)phenyl]-2H-benzotriazol, 2-(2-Hydroxy-3-tert-butyl-5-iso-octylpropionat)-2H-benzotriazol, Reaktionsprodukt von 2-(2-Hydroxy-3-tert-butyl-5-methylpropionat)-2H-benzotriazol und Polyethylenetherglycol mit einem gewichtsmittleren Molekulargewicht von 300 und Mischungen davon.

10. Beschichtungszusammensetzung nach einem der Ansprüche 1 bis 9, wobei die Beschichtungszusammensetzung ferner mindestens eine Verbindung umfasst, die ausgewählt ist aus der Gruppe umfassend Härtungskatalysatoren, Antioxidantien, Additive, Pigmente, Streckmittel, Verbindungen mit mindestens einer Alkoxysilangruppe und/oder mindestens einer Epoxygruppe, hydroxylfunktionelle Bindemittel wie Acryle, Polyester, HALS-Derivate, anorganische Rheologiekontrollmittel wie Siliciumdioxid und organische Durchhangkontrollmittel auf Basis von Polyharnstoff und/oder Polyamid und Mischungen davon.

11. Beschichtungszusammensetzung nach einem der Ansprüche 1 bis 10, wobei die Beschichtungszusammensetzung eine Zweikomponenten-Beschichtungszusammensetzung ist.

12. Verfahren zum Beschichten eines metallischen Substrats, wobei das Verfahren die folgenden Schritte umfasst:

a) Auftragen der Beschichtungszusammensetzung nach einem der Ansprüche 1 bis 11 auf mindestens einen Abschnitt eines zu beschichtenden metallischen Substrats, und
b) Härten der Beschichtungszusammensetzung von Schritt a).

13. Verfahren nach Anspruch 12, wobei mehrere Schichten von Beschichtungszusammensetzungen auf mindestens einen Abschnitt eines metallischen Substrats aufgetragen werden und mindestens eine der Schichten die Beschichtungszusammensetzung nach einem der Ansprüche 1 bis 11 umfasst und die mehreren Schichten entweder nass in nass oder durch Härten einer Schicht vor dem Auftragen der nächsten Schicht der mehreren Schichten aufgetragen werden.

14. Verwendung der Beschichtungszusammensetzung nach einem der Ansprüche 1 bis 11 zum Herstellen einer Zweikomponenten-Beschichtungszusammensetzung.

**Revendications**

1. Composition de revêtement comprenant :

a) un prépolymère d'aspartate à chaîne allongée, dans laquelle le prépolymère d'aspartate à chaîne allongée

x) est exempt de groupes isocyanate,
xi) possède un poids d'équivalent NH de 250 à 1 000 g, et
xii) est un produit de réaction de

i) un mélange comprenant au moins un ester d'acide di-aspartique et au moins un ester d'acide mono-aspartique à fonctionnalité amino, le rapport molaire entre le au moins un ester d'acide di-aspartique et le au moins un ester d'acide mono-aspartique à fonctionnalité amino étant de 99,5:0,5 à 50:50, et
ii) au moins un polyisocyanate,

b) au moins un agent de durcissement ayant des groupes isocyanate libres, et
c) au moins un absorbeur d'UV constitué d'oxanilide ou d'un dérivé de celui-ci et/ou de benzotriazole ou d'un dérivé de celui-ci.

2. Composition de revêtement selon la revendication 1, dans laquelle le au moins un ester d'acide di-aspartique et/ou

le au moins un ester d'acide mono-aspartique à fonctionnalité amino est/sont un produit de réaction d'au moins un maléate de dialkyle et/ou fumarate de dialkyle et d'au moins une diamine primaire.

3. Composition de revêtement selon la revendication 1 ou 2, dans laquelle le au moins un ester d'acide di-aspartique et/ou le au moins un ester d'acide mono-aspartique à fonctionnalité amino a/ont été obtenu(s) en faisant réagir le au moins un maléate de dialkyle et/ou fumarate de dialkyle et la au moins une diamine primaire selon un rapport d'équivalence de maléate de dialkyle et/ou fumarate de dialkyle à la diamine primaire de 2:1 à 1:4.

4. Composition de revêtement selon la revendication 2 ou 3, dans laquelle le au moins un maléate de dialkyle est sélectionné dans le groupe comprenant le maléate de diméthyle, le maléate de diéthyle, le maléate de di-n-butyle, le maléate de di-iso-butyle, le maléate de di-tert-butyle, le maléate de diamyle, le maléate de di-n-octyle, le maléate de dilauryle, le maléate de dicyclohexyle, le maléate de di-tert-butylcyclohexyle et des mélanges de ceux-ci et/ou le au moins un fumarate de dialkyle est sélectionné dans le groupe comprenant le fumarate de diméthyle, le fumarate de diéthyle, le fumarate de di-n-butyle, le fumarate de di-iso-butyle, le fumarate de di-tert-butyle, le fumarate de diamyle, le fumarate de di-n-octyle, le fumarate de dilauryle, le fumarate de dicyclohexyle, le fumarate de di-tert-butylcyclohexyle et des mélanges de ceux-ci.

5. Composition de revêtement selon l'une quelconque des revendications 2 à 4, dans laquelle la au moins une diamine primaire est sélectionnée dans le groupe comprenant l'éthylène diamine, le 1,2-diaminopropane, le 1,4-diaminobutane, le 1,3-diaminopentane, le 1,6-diaminohexane, le 2,5-diamino-2,5-diméthylhexane, les 2,2,4- et 2,4,4-triméthyl-1,6-diaminohexane, le 1,11-diaminoundécane, le 1,12-diaminododécane, les 1,3- et 1,4-cyclohexane diamine, le 1-amino-3,3,5-triméthyl-5-aminométhylcyclohexane (IPDA), les 2,4- et 2,6-hexahydrotoluylène diamine, les 2,4'- et 4,4'-diamino-dicyclohexylméthane et les 3,3'-dialkyl-4,4'-diaminodicyclohexylméthanes, tels que le 3,3'-diméthyl-4,4'-diaminodicyclohexylméthane et le 3,3'-diéthyl-4,4'-diaminodicyclohexylméthane, la 2-méthyl-1,5-pentanediamine et les 1,3- et 1,4-xylylènediamine, la tétraméthylxylylènediamine, le 4,4'-diaminodicyclohexylméthane (PACM) et des mélanges de ceux-ci.

6. Composition de revêtement selon l'une quelconque des revendications 1 à 5, dans laquelle le au moins un polyisocyanate et/ou l'agent de durcissement ayant des groupes isocyanate libres est sélectionné dans le groupe comprenant le 1-isocyanato-3,3,5-triméthyl-5-isocyanatométhyl-cyclohexane (IPDI), le 4,4'-diisocyanatocyclohexylméthane, les cyclotrimères et/ou les biurets de 1-isocyanato-3,3,5-triméthyl-5-isocyanatométhyl-cyclohexane, le diisocyanate d'hexaméthylène (HDI), le 1-bis(isocyanatocyclohexyl)-méthane et leurs dérivés, le diisocyanate de 1,1,6,6-tétraméthyl-hexaméthylène, le diisocyanate de p- ou m-tétraméthylxylylène, le diisocyanate de 2,2',5-triméthylhexane et des mélanges de ceux-ci et des produits de réaction de ceux-ci.

7. Composition de revêtement selon l'une quelconque des revendications 1 à 6, dans laquelle le prépolymère d'aspartate à chaîne allongée a été obtenu en faisant réagir le mélange comprenant au moins un ester d'acide di-aspartique et au moins un ester d'acide mono-aspartique à fonctionnalité amino avec le au moins un polyisocyanate selon un rapport d'équivalence de groupes NH et $NH_2$ dans le mélange aux groupes NCO du au moins un polyisocyanate de 2,0:0,2 à 2,0:1,8.

8. Composition de revêtement selon l'une quelconque des revendications 1 à 7, dans laquelle le prépolymère d'aspartate à chaîne allongée comprend un rapport d'équivalence de groupes aspartate aux groupes urée de 10:1 à 1:0,9.

9. Composition de revêtement selon l'une quelconque des revendications 1 à 8, dans laquelle

a) l'oxanilide ou le dérivé de celui-ci est le N-(2-éthoxyphényl)-N-(4-isododécylphényl)oxamide, et/ou
b) le benzotriazole ou le dérivé de celui-ci est sélectionné dans le groupe comprenant le benzotriazole, le 2-(2-hydroxy-5-méthylphényl)-2H-benzotrazole, le 2-(2-hydroxy-3,5-di-tert-amyl-phényl)-2H-benzotriazole, le 2-[2-hydroxy-3,5-di(1,1-diméthylbenzyl)phényl]-2H-benzotriazole, le 2-(propionate de 2-hydroxy-3-tert-butyl-5-méthyle)-2H-benzotriazole, un produit de réaction du 2-(propionate de 2-hydroxy-3-tert-butyl-5-iso-octyle)-2H-benzotriazol et un éther de polyéthylène glycol ayant un poids moléculaire moyen en poids de 300 et des mélanges de ceux-ci.

10. Composition de revêtement selon l'une quelconque des revendications 1 à 9, dans laquelle la composition de revêtement comprend en outre au moins un composé sélectionné dans le groupe comprenant les catalyseurs de durcissement, les antioxydants, les additifs, les pigments, les agents d'extension, les composés ayant au moins un groupe alcoxysilane et/ou au moins un groupe époxy, les liants à fonctionnalité hydroxyle comme les acryliques,

les polyesters, les dérivés d'HALS, les agents inorganiques de contrôle de la rhéologie tels que les silices et les agents organiques de contrôle de l'affaissement à base de polyurée et/ou de polyamide, et des mélanges de ceux-ci.

**11.** Composition de revêtement selon l'une quelconque des revendications 1 à 10, dans laquelle la composition de revêtement est une composition de revêtement à deux composants.

**12.** Procédé de revêtement d'un substrat métallique, le procédé comprenant au moins les étapes consistant à :

a) appliquer la composition de revêtement selon l'une quelconque des revendications 1 à 11 sur au moins une partie d'un substrat métallique à revêtir, et
b) durcir la composition de revêtement de l'étape a).

**13.** Procédé selon la revendication 12, dans lequel de multiples couches de compositions de revêtement sont appliquées sur au moins une partie d'un substrat métallique et au moins l'une des couches comprend la composition de revêtement selon l'une quelconque des revendications 1 à 11 et les multiples couches sont appliquées soit mouillées sur mouillées, soit par durcissement dans un premier temps d'une couche avant l'application de la couche suivante des multiples couches.

**14.** Utilisation de la composition de revêtement selon l'une quelconque des revendications 1 à 11 pour préparer une composition de revêtement à deux composants.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0403921 A
- EP 0470461 A
- WO 2005073188 A
- US 5633336 A
- WO 2013098186 A1
- WO 2009086026 A
- US 4677154 A
- WO 2004063242 A
- EP 1081171 A2